# EUROPEAN PATENT APPLICATION

(11) **EP 2 143 511 A1**
(43) Date of publication of application: **13.01.2010**
(21) Application number: 09165076.2
(22) Date of filing: 09.07.2009
(51) Int. Cl.: B21D 53/88, B21D 35/00, B60G 21/05

(54) **Beam formed of a blank sheet and method for its manufacturing**

(30) Priority: 09.07.2008 KR 20080066362
(71) Applicant: Hwashin co.Ltd., Gyeongsangbuk-do (KR)
(72) Inventor: Kim, Tae Jun, Gyeongsangbuk-do (KR)
(74) Representative: Hendry, Niall James

(57) **Abstract**

A beam formed of a blank and a method for manufacturing the same are disclosed. The beam includes a body (70;170) formed by bending a work object (10;100) of the blank, a connection part (80;180) formed at both ends of the body (70;170) to engage with other members, and a bent part (74;174) formed along the body (70;170). The beam facilitates formation of a shape imparting improved rigidity to the beam.

## Description

### BACKGROUND OF THE INVENTION

### 1. Field of the Invention

The present invention relates to a beam formed of a plank, and more particularly, to a beam that is formed of a plank to facilitate formation of a shape capable of improving rigidity of the beam, and a method for manufacturing the same.

### 2. Description of the Related Art

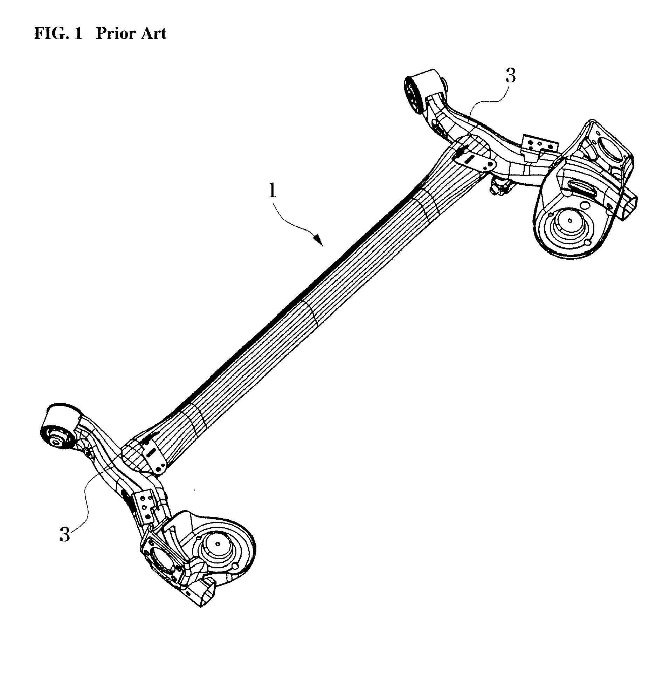

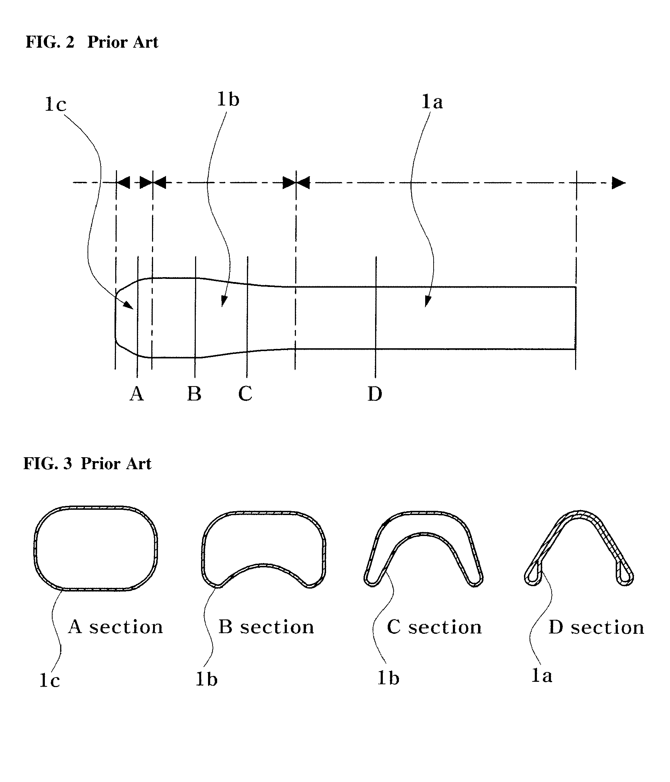

Fig. 1 is a perspective view of a conventional torsion beam for a rear-wheel suspension system of a vehicle, Fig. 2 is a plan view of the conventional torsion beam, and Fig. 3 is cross-sectional views respectively taken along lines A, B, C, and D shown in Fig. 2.

Referring to Figs. 1 to 3, a torsion beam suspension of a rear-wheel suspension system for a vehicle generally includes a torsion beam 1, and a trailing arm 3 connected in a front-rear direction to either end of the torsion beam 1 to maintain a posture of the vehicle when the vehicle corners. The torsion beam 1 must have torsion rigidity and bending rigidity.

Conventionally, the torsion beam 1 is formed by pressing a cylindrical pipe to have a closed double-fold "∩" or "∧"-shaped body for securing a proper torsion rigidity and to have opposite "□"-shaped sides for securing wide welding surface areas with respect to the tailing arms 3 while improving transverse rig id ity.

According to cross-sectional shapes, the torsion beam 1 is generally divided into three sections: a body 1a which maintains the cross-sectional shape of the torsion beam 1; a variation section 1 b formed at either end of the body 1 a and having a variable cross-section; and a connecting section 1 c formed outside the variation section 1 b and having a rectangular cross-section for connection with the trailing arm 3.

The cross-section of the body 1a has the closed "∩" or "∧" shape, in which some regions of the body 1 a including a vertex have upper and lower surfaces overlapping each other and each end of the body 1 a has a space formed therein.

For producing a product having a "∩" or "∧"-shaped cross-section by pressing a cylindrical pipe, a conventional press machine is constituted by two pairs of dies including identical upper dies and different lower dies or by a single die assembly including a single upper die and several lower dies.

Since a conventional torsion beam is made by processing a cylindrical pipe, the conventional method cannot produce a torsion beam that has various and continuous cross-sectional shapes along the torsion beam.

Further, although a wider cross-sectional area of a connection part between the torsion beam and the trailing arm imparts a higher rigidity to the torsion beam, the conventional torsion beam is difficult to have an increased cross-sectional area of the connection part due to the use of the pipe-shaped beam for manufacturing the torsion beam.

Therefore, there is a need for an improved torsion beam that overcomes the problems of the prior art.

### SUMMARY OF THE INVENTION

The present invention is conceived to solve the problems of the conventional techniques as described above, and an aspect of the present invention is to provide a beam that is formed of a plank to facilitate formation of a shape capable of improving rigidity of the beam, and a method for manufacturing the same.

In accordance with an aspect of the present invention, there is provided a beam formed of a plank including: a body formed by bending a work object of a plank; a connection part formed at both ends of the body to engage with other members; and a bent part formed along the body.

The body may have a space formed therein.

The beam may further include a seam part making the body and the connection parts have closed loop-shaped cross-sections.

The beam may further include a reinforcement part formed by bending the work object.

The beam may further include an extension part provided to the connection part.

In accordance with another aspect of the present invention, there is provided a method for manufacturing a beam with a plank, including: pressing a plank-shaped work object by coupling a lower die and an upper die with the work object placed on the lower die to form a lower shape of the beam; bending opposite ends of the work object to form an upper shape of the beam; and seaming the opposite ends of the work object which have been bent to face each other.

The pressing a plank-shaped work object may include forming a seating groove on the plank-shaped work object before the lower die is coupled to the upper die.

The seaming the opposite ends may be carried out by welding.

### BRIEF DESCRIPTION OF THE DRAWINGS

The above and other features and advantages of the present invention will become apparent from the following description of exemplary embodiments given in conjunction with the accompanying drawings, in which:
Fig. 1 is a perspective view of a conventional torsion beam for a rear-wheel suspension system of a vehicle;
Fig. 2 is a plan view of the conventional torsion beam;
Fig. 3 is cross-sectional views respectively taken along lines A, B, C, and D shown in Fig. 2;
Fig. 4 is a bottom perspective view of a beam formed of a plank according to a first embodiment of the present invention;
Fig. 5 is a perspective view of the beam according to the first embodiment of the present invention, illustrating a cut section of the beam;
Fig. 6 is a cross-sectional view of the beam according to the first embodiment of the present invention;
Fig. 7 is a flowchart of a method for manufacturing a beam using a plank according to one embodiment of the present invention;
Fig. 8 is a perspective view illustrating a pressing process of the method according to the embodiment of the present invention;
Fig. 9 is a perspective view illustrating a bending process of the method according to the embodiment of the present invention;
Fig. 10 is a perspective view of a beam formed of a plank according to a second embodiment of the present invention;
Fig. 11 is a perspective view of a work object of a plank for the beam according to the second embodiment of the present invention;
Fig. 12 is a cross-sectional view of a body of a beam formed of a plank according to a third embodiment of the present invention; and
Fig. 13 is a cross-sectional view of a body of a beam formed of a plank according to a fourth embodiment of the present invention.

### DETAILED DESCRIPTION OF THE INVENTION

Exemplary embodiments of the present invention will be described in detail with reference to the accompanying drawings hereinafter.

For convenience of description, a torsion beam for vehicles and a method for manufacturing the same will be described by way of illustration.

Here, it should be noted that the drawings are not to precise scale and may be exaggerated in thickness of lines or size of components for descriptive convenience and clarity only.

Furthermore, terms used herein are defined by taking functions of the present invention into account and can be changed according to the practice or intention of users or operators.

Therefore, definition of the terms should be made according to overall disclosures set forth herein.

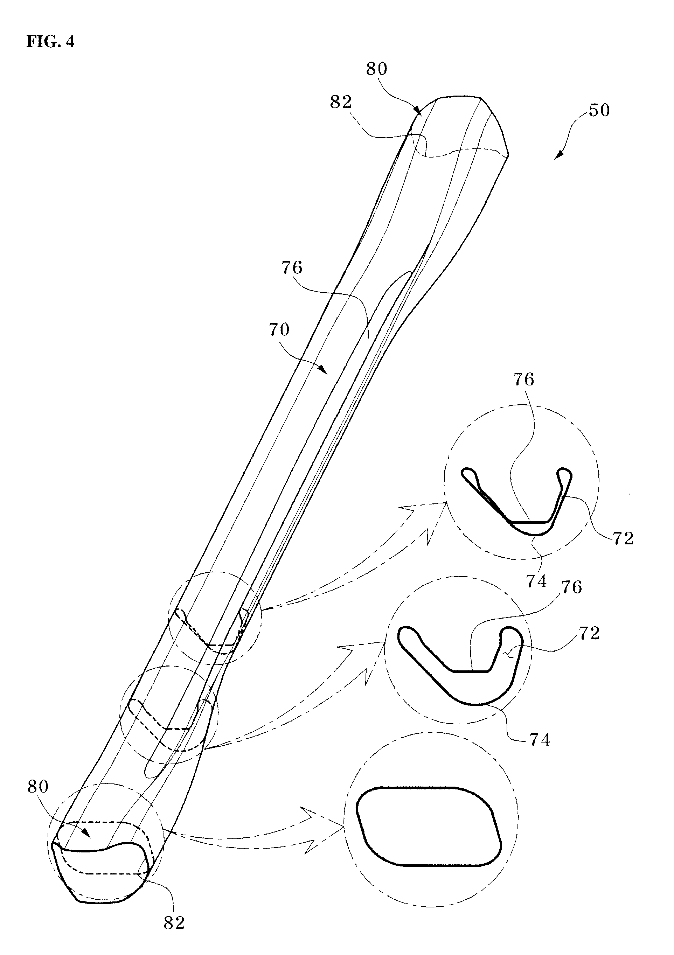

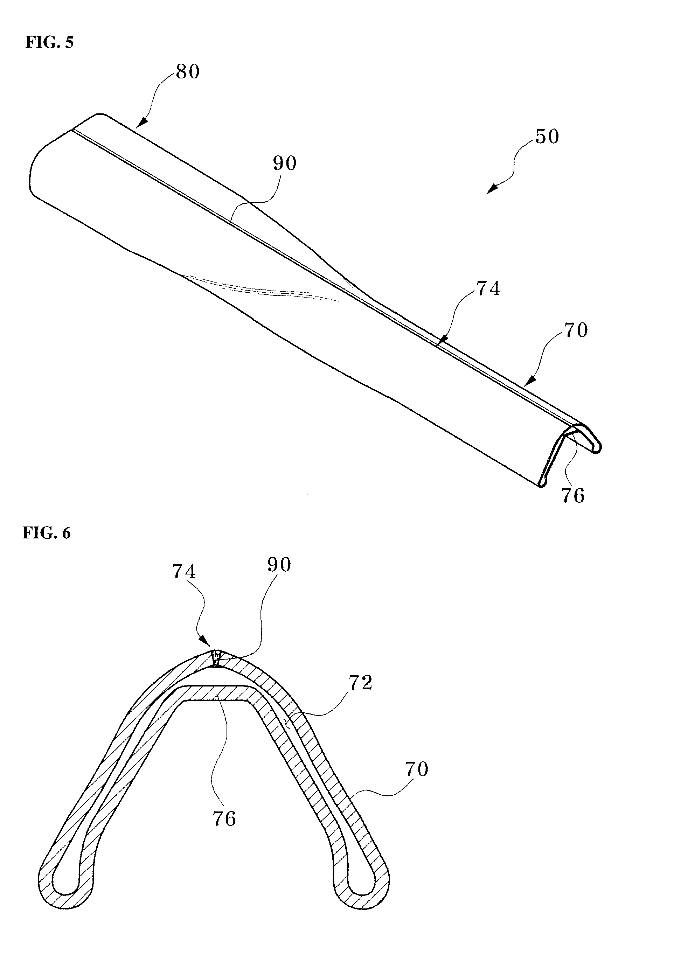

Fig. 4 is a bottom perspective view of a beam formed of a plank according to a first embodiment of the present invention, Fig. 5 is a perspective view of the beam according to the first embodiment of the present invention, illustrating a cut section of the beam, and Fig. 6 is a cross-sectional view of the beam according to the first embodiment of the present invention.

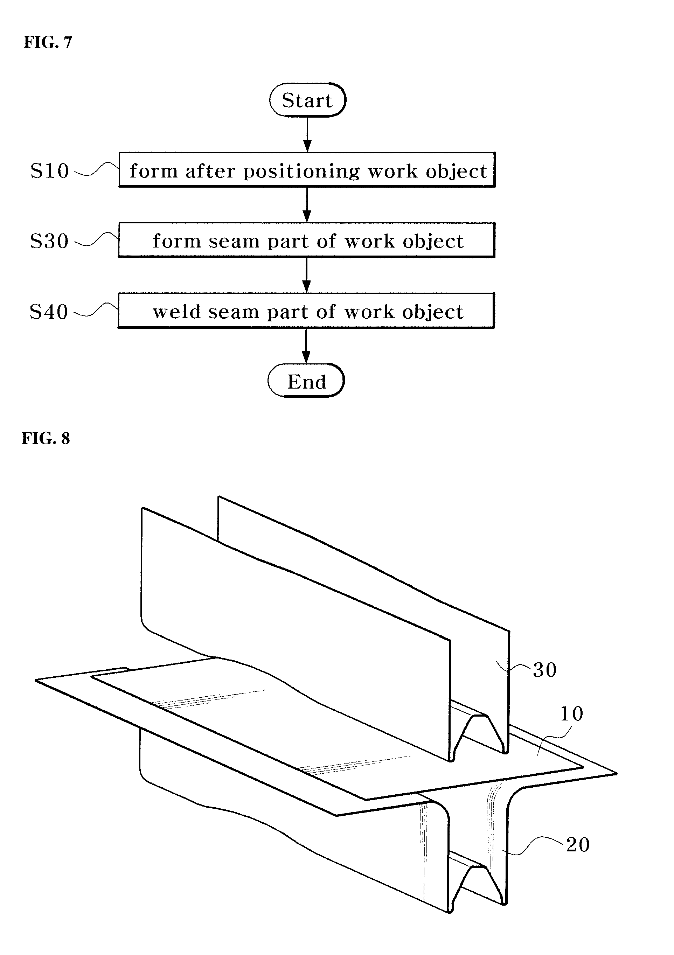

Referring to Figs. 4 to 6, a beam according to the first embodiment of the present invention is formed of a plank, and includes a body 70 formed by bending a work object of a plank 10 (see Fig. 8), connection parts 80 formed at opposite ends of the body 70 to engage with other members, and a bent part 74 formed along the body 70.

Herein, the beam formed of the plank is a torsion beam 50 for vehicles, and is coupled to a pair of trailing arms (not shown) via the connection parts 80 formed at the opposite ends of the beam.

The connection part 80 has a substantially rectangular pipe-shaped cross-section with a distance between upper and lower surfaces gradually decreasing toward the body 70, which is formed to have a "∩"-shaped or "∧"-shaped cross-section via the bent part 74.

With this configuration, the torsion beam 50 for supporting the trailing arms 50 has improved torsion and transverse rigidity.

Further, the body 70 has a space 72 formed therein, so that spring rigidity of the torsion beam 50 can be more effectively improved.

The space 72 is formed by defining a predetermined distance between a part of the work object 10 corresponding to an upper surface of the body 70 and a part of the work object 10 corresponding to a lower surface of the body 70.

When the predetermined distance is defined between the part of the work object 10 corresponding to the upper surface of the body 70 and the part of the work object 10 corresponding to the lower surface of the body 70, the bent part 74 can be easily formed by bending the work object 10.

The conventional method processes a cylindrical pipe using a press machine to manufacture a beam. In this case, although it is easy to form a concave recess on the pipe having a circular cross-section, the conventional method suffers from difficulty in formation of a protrusion on the pipe.

Compared to the conventional method employing such a pipe-shaped work object to produce the beam, the method of the present invention produces the beam by bending the plank-shaped work object 10, so that it can form the space 72 in much wider variety of shapes.

When the torsion beam 50 is produced by bending the plank-shaped work object 10, a seam part 90 is formed along the beam, providing the body 70 and the connection parts 80 with closed loop-shaped cross-sections.

In this embodiment, the seam part 90 is formed on the upper surface of the torsion beam 50. Thus, the seam part 90 extends along the bent part 74 formed on the body 70.

The torsion beam 50 further includes a reinforcement part 76 which enlarges a portion of the space 72 facing the bent part 74 over other portions of the space 72, thereby improving the torsion rigidity of the torsion beam.

The reinforcement part 76 is formed by bending a portion of the work object 10 facing the bent part 74 in an opposite direction with respect to the bent part 74, thereby defining a wider space than other portions of the space 72.

As described below, after a lower surface of the torsion beam 50, that is, the reinforcement part 76, is formed together with the bent part 74 by die operation, the space 72 is formed by bending ends of the work object 10.

On the other hand, although the conventional method employing the pipe-shaped work object can easily form a bent part by pressing the work object, it is difficult for the conventional method to precisely define the distance between the part of the work object corresponding to the upper surface of the torsion beam and the part of the work object corresponding to the lower surface of the torsion beam, that is, a height of the space, and to form the reinforcement part of the torsion beam, which is bent near the center of the lower surface of the torsion beam in a downward direction.

As such, according to the embodiment of the present invention, the torsion beam 50 is produced from the plank-shaped work object 10, thereby reducing time and cost for manufacturing the torsion beam 50.

Next, a method for manufacturing a beam using a plank according to one embodiment of the present invention will be described.

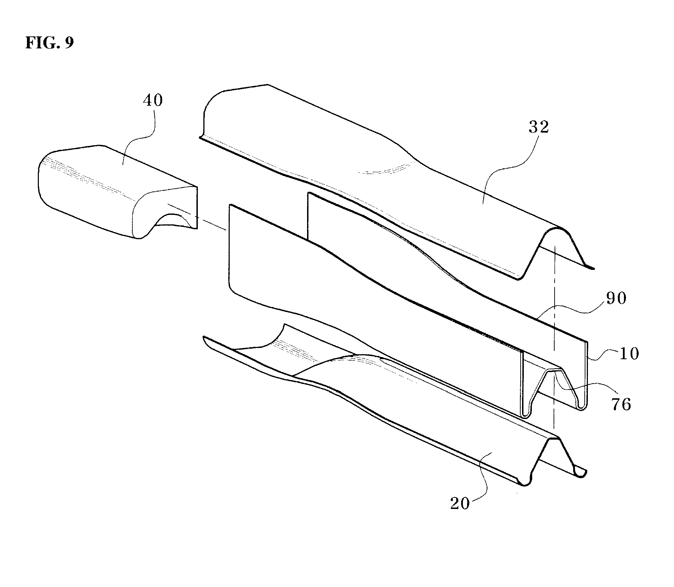

Fig. 7 is a flowchart of a method for manufacturing a beam using a plank according to one embodiment of the present invention, Fig. 8 is a perspective view illustrating a pressing process of the method according to the embodiment of the present invention, and Fig. 9 is a perspective view illustrating a bending process of the method according to the embodiment of the present invention.

Referring to Figs. 4 to 9, the method according to this embodiment includes: pressing a plank-shaped work object 10 by coupling an upper die 30 and a lower die 20, with the work object 10 placed on the lower die 20, to form a lower shape of a torsion beam 50 in Operation S10; bending opposite ends of the work object 10 to form an upper shape of the torsion beam 50 in Operation S30; and seaming the opposite ends of the work object 10, which have been bent to face each other, in Operation S40.

The lower die 20 is formed with a concave recess which will form the lower shape of the torsion beam 50 when pressing the plank-shaped work object 10 in Operation S10. Here, the concave recess of the lower die 20 has a triangular protrusion on a bottom surface of the recess such that a bent part 74 can be formed along the middle of the work object 10 pressed into the recess.

Further, the protrusion has a flat upper surface such that a portion of the work object 10 disposed to face the flat upper surface of the protrusion becomes a reinforcement part 76.

The upper die 30 has a punch shape which can be inserted into the recess of the lower die 20, and a lower surface of the upper die 30 has the same shape as the lower surface of the lower die 20. Therefore, when the plank-shaped work object 10 is pressed between the lower and upper dies 20 and 30, the lower surface of the upper die 30 forms the lower shape of the torsion beam 50.

At this time, the opposite ends of the plank-shaped work object 10 face upward.

After Operation S10, the upper die 30 is separated from the lower die 20 to allow the work object 10 to be separated from the upper die 30, and a separate upper die 32 is operated to press the opposite ends of the work object 10 facing upward, so that the opposite ends of the work object 10 are bent to face each other.

Here, the separate upper die 32 for pressing the ends of the work object 10 has a convex shape, so that the opposite ends of the work object 10 are bent toward the middle of the separate upper die 32 while forming a curved surface.

Further, a cam 40 is inserted into each of connection parts 80 of the torsion beam 50 such that a distal end of the work object 10 constituting the connection part 80 of the torsion beam 50 closely contacts the cam 40 to thereby have a substantially rectangular cross-section.

As such, since the cross-section of the connection part 80 has such a substantially rectangular closed-loop shape, the torsion beam 50 is prevented from being deformed by external force which can be applied in the lateral direction.

The lower die 20, the upper die 30, and the cam 40 are components of the press machine that are generally used when forming a metallic plank and can be easily manipulated by a person having ordinary knowledge in the art. Thus, a detailed description and drawings thereof will be omitted herein.

The seaming of the opposite ends in Operation S40 is performed by welding. Here, when the opposite ends of the work object 10 disposed to face each other are joined via welding, the torsion beam 50 has a closed loop-shaped cross-section, and in particular, the upper surface of the torsion beam 50 is formed into a "∩" or "∧" shape, thereby constituting the bent part 74.

A seating groove 82 formed on the end of the connection part 80 to be coupled to a trailing arm is previously formed on the work object 10 before Operation S10.

When the seating groove 82 is previously formed on the work object 10 before Operation S10, it is possible to omit a separate process of forming the seating groove 82 after Operations S10 and S30.

According to the present invention, since the plank-shaped work object 10 is employed in manufacturing the beam, it is possible to preform the seating groove 82 by cutting the work object 10 before the lower die 20 is coupled to the upper die 30 in Operation S10.

Thus, compared to the conventional method wherein the seating groove 82 is formed on the pipe-shaped connection part 80, the present invention enables the seating groove 82 to be more conveniently formed on the work object 10, thereby simplifying the process.

The work object 10 for the torsion beam 50 may be manufactured to have different widths in the longitudinal direction. Here, a portion of the work object 10 corresponding to the connection part 80 may have a greater width than other portions, thereby achieving a pipe extension effect.

An increase in cross-sectional area of the connection part 80 as described above results in improved transverse rigidity and durability of the torsion beam 50.

For the conventional method of manufacturing the torsion beam 50 using a cylindrical pipe, it is possible to perform pipe extension for forcibly enlarging the cross-sectional area of the connection part 80. In this case, however, the pipe extension causes a reduction in thickness of the connection part 80 and provides a limited effect thereon due to a limited elongation rate of the pipe.

Conversely, the method of the present invention can arbitrarily adjust the width of the work object, making it possible to obtain a greater pipe extension effect substantially without variation in thickness of the work object 10.

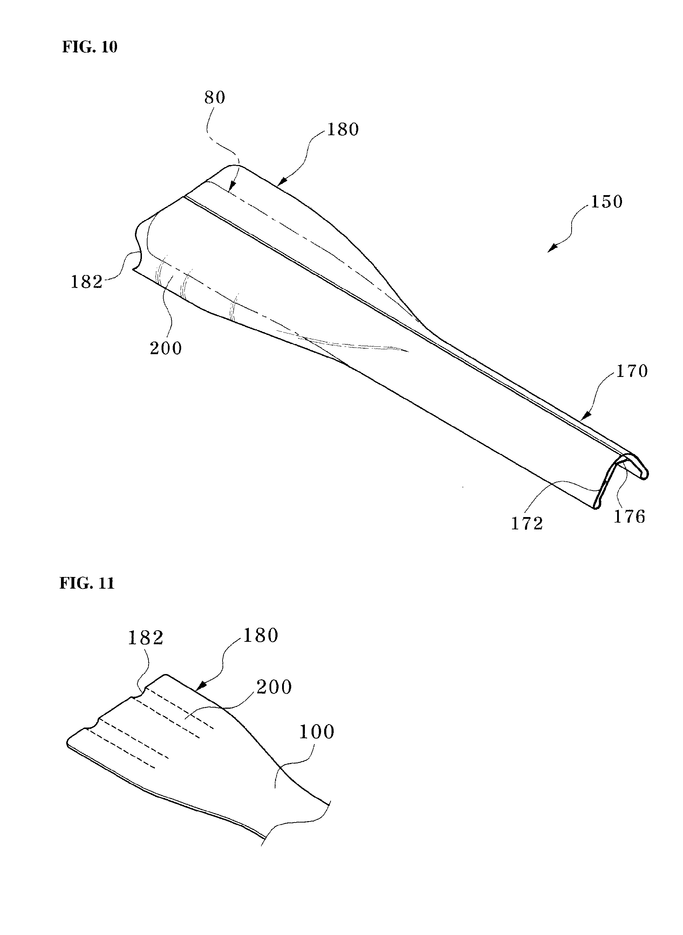

Fig. 10 is a perspective view of a beam formed of a plank according to a second embodiment of the present invention, and Fig. 11 is a perspective view of a work object of a plank for the beam according to the second embodiment of the present invention.

Referring to Figs. 10 and 11, a beam formed of a plank according to the second embodiment of the present invention also includes a body 170, connection parts 180, a bent part 174, a space 172, and a reinforcement part 176 as in the first embodiment. However, the beam of the second embodiment can be differentiated from the first embodiment by the configuration of the connection parts 180.

According to the second embodiment, the connection part 180 is provided with an extension part 200 which increases a cross-sectional area of the connection part 180.

As the cross-sectional area of the connection part 180 is increased by the extension part 200, the trailing arm is coupled to the connection part 180 through an enlarged section of the connection part 180 which restricts the trailing arm coupled to the connection part 180, so that a transverse force transferred from an axle of a vehicle to the torsion beam through each of the trailing arms is applied to the enlarged section of the connection part 180, thereby improving durability of the connection part 180.

As a result, the rigidity of the torsion beam 150 capable of enduring the lateral force, that is, transverse rigidity of the torsion beam 150, is improved.

In addition, since the torsion beam 150 of this embodiment is also made of a plank-shaped work object 100, the formation of a seating groove 182 and a connection part 180 adapted for the extension part 200 can be easily carried out.

Reference numeral 80 shown by a dash-dotted line in Fig. 10 indicates the beam according to the first embodiment for comparison with the beam of the second embodiment.

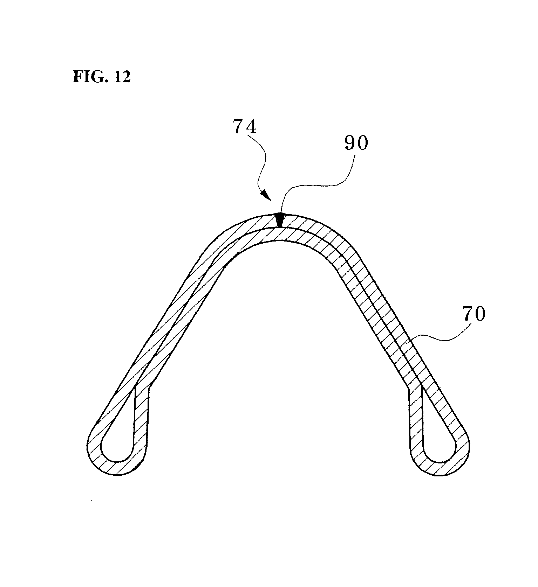

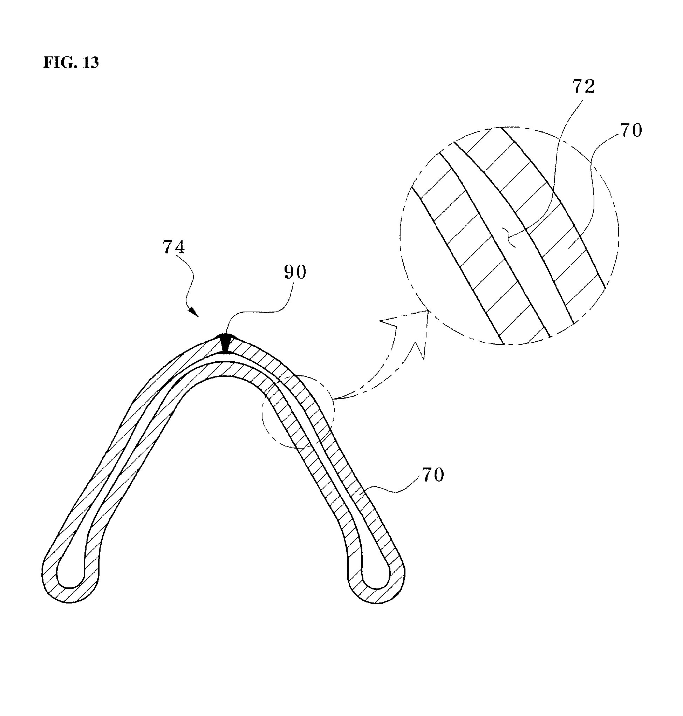

Fig. 12 is a cross-sectional view of a body of a beam formed of a plank according to a third embodiment of the present invention, and Fig. 13 is a cross-sectional view of a body of a beam formed of a plank according to a fourth embodiment of the present invention.

Referring to Figs. 12 and 13, a beam formed of a plank according to the third embodiment of the present invention also includes a body 70, connection parts 80 (see Fig. 6), and a seam part 90 as in the first embodiment. However, the beam of the third embodiment does not include the space and the reinforcement part.

Further, a beam formed of a plank according to the fourth embodiment of the present invention also includes a body 70, connection parts 80, a seam part 90, and a space 72 as in the first embodiment. However, the beam of the fourth embodiment does not include the reinforcement part.

As such, in the method of manufacturing the beam having a closed loop-shaped cross-section according to the present invention, a plank-shaped work object can be formed to the beam having a variety of cross-sectional shapes by pressing. At this time, since the cross-sectional shapes for improving the torsion rigidity and the transverse rigidity of the beam can be variously modified by a person having ordinary knowledge in the art, a detailed description thereof will be omitted herein.

As apparent from the above description, the beam according to the present invention is formed by pressing a work object of a plank using a general press machine, thereby reducing manufacturing costs.

According to the present invention, the beam has a space formed inside the center of the body and communicating with opposite ends of the beam to improve torsion rigidity of the beam, thereby preventing the beam from being damaged or deformed by external torsion.

Further, according to the present invention, the torsion rigidity of the beam can be increased without using a separate member by increasing a separation that forms the space between the upper and lower surfaces of the body of the beam, enabling reduction in weight and manufacturing costs of the beam.

Further, according to the present invention, the beam is formed at both ends thereof with an extension part which increases the cross-sectional area of a connection part of the beam, which is coupled to a trailing arm, to improve transverse rigidity of the beam so that the beam can be prevented from being deformed or damaged by external force applied laterally to the beam.

Further, the method according to the present invention produces the beam by forming the plank-shaped work object to provide various cross-sectional shapes to the beam, thereby facilitating the formation of the space therein.

Further, the method according to the present invention produces the beam by forming the plank work object to facilitate the formation of the extension part without a separate pipe extension, thereby facilitating an increase in cross-sectional area of the connection part.

Moreover, the method according to the present invention forms a seating groove of the connection part on the work object to facilitate the formation of the seating groove, thereby reducing time and cost in manufacturing the beam.

Although the present invention has been described with reference to the embodiments and the accompanying drawings, it will be apparent to those skilled in the art that the embodiments are given by way of illustration, and that various modifications and equivalent embodiments can be made without departing from the spirit and scope of the present invention.

Further, the description of the torsion beam for vehicles as provided herein is only one example, and the present invention can be applied to other products.

Therefore, the scope of the present invention should be limited only by the following claims.

## Claims

1. A beam formed of a plank, comprising:
a body (70; 170) formed by bending a work object (10; 100) of the plank;
a connection part (80; 180) formed at both ends of the body (70; 170) to engage with other members; and
a bent part (74; 174) formed along the body (70; 170).

2. The beam according to claim 1, wherein the body (70; 170) has a space (72; 172) formed therein.

3. The beam according to claim 1, further comprising: a seam part (90) providing the body (70; 170) and the connection parts (80; 180) with closed loop-shaped cross-sections.

4. The beam according to any one of claims 1 to 3, further comprising: a reinforcement part (90) formed by bending the work object (10; 100).

5. The beam according to claim 4, further comprising: an extension part (200) provided to the connection part (180).

6. A method for manufacturing a beam with a plank, comprising:
pressing a plank-shaped work object (10; 100) by coupling a lower die (20) and an upper die (30) with the work object (10; 100) placed on the lower die (20) to form a lower shape of the beam;
bending opposite ends of the work object (10; 100) to form an upper shape of the beam; and
seaming the opposite ends of the work object (10; 100) which have been bent to face each other.

7. The method according to claim 6, wherein the pressing a plank-shaped work object (10; 100) comprises forming a seating groove (82) of the beam on the work object (10; 100) before the lower die (20) is coupled to the upper die (30).

8. The method according to claim 6, wherein the seaming the opposite ends is carried out by welding.
